# EUROPÄISCHE PATENTSCHRIFT

(11) **EP 0 689 667 B1**
(45) Veröffentlichungstag und Bekanntmachung des Hinweises auf die Patenterteilung: **03.06.1998**
(21) Anmeldenummer: 95902048.8
(22) Anmeldetag: 05.12.1994
(51) Int. Cl.: G01H 3/08

(54) **VERFAHREN ZUM AUSWERTEN VON SCHALL**
SOUND EVALUATION PROCESS
PROCEDE D'EVALUATION DU SON

(30) Priorität: 18.12.1993 DE 4343403
(43) Veröffentlichungstag der Anmeldung: 03.01.1996
(73) Patentinhaber: ROBERT BOSCH GMBH, 70442 Stuttgart (DE)
(72) Erfinder: KEIPER, Winfried, D-71732 Tamm (DE); HELDMANN, Klaus, D-71111 Waldenbuch (DE)
(86) Internationale Anmeldenummer: DE9401440
(87) Internationale Veröffentlichungsnummer: WO9516899

(56) Entgegenhaltungen:
- ACUSTICA, Bd.67, Nr.2, Dezember 1988, STUTTGART Seiten 113 - 121 W.HEINBACH 'Aurally adequate signal representation: the part-tone-time-pattern' in der Anmeldung erwähnt
- ACUSTICA, Bd.57, Nr.4/5, 1985, STUTTGART Seiten 242 - 256 E.TERHARDT 'Fourier transformation of time signals: conceptual revision' in der Anmeldung erwähnt
- JOURNAL OF THE ACOUSTICAL SOCIETY OF AMERICA, Bd.71, Nr.3, März 1982, NEW YORK, USA Seiten 679 - 688 E.TERHARDT ET AL 'Algorithm for extraction of pitch and pitch salience from complex tonal signals' in der Anmeldung erwähnt
- PATENT ABSTRACTS OF JAPAN vol. 18, no. 76 (M-1556) 8. Februar 1994 & JP,A,05 288 033 (SANGO KK) 2. November 1993
- MACHINE DESIGN, Bd.48, Nr.14, Juni 1976, CLEVELAND US Seiten 86 - 91 G.F.LANG 'The hidden message in mechanical vibrations'
- EUROSPEECH 91. 2ND EUROPEAN CONFERENCE ON SPEECH COMMUNICATION AND TECHNOLOGY PROCEEDINGS, Bd.3, September 1991, GENOVA, ITALY Seiten 1437 - 1440 M.BEHAM 'An auditorily based spectral transformation of speech signals'
- P.BIESALSKI ET AL 'Pädaudiologie' 1994 , GEORG THIEME VERLAG , STUTTGART, DE siehe Seite 43, Zeile 5 - Seite 43, Zeile 9

## Beschreibung

### Stand der Technik

Die Erfindung geht aus von einem Verfahren zum Auswerten von Schall nach der Gattung des Hauptanspruchs. Aus einem Zeitschriftenbeitrag von W. HEINBACH, "Aurally adequate signal representation: The Part-Tone-Time-Pattern", Acustica, Vol. 67 (1988), S. 113 - 120 wird eine wahrnehmungsorientierte Methode der Repräsentation von Audio-Signalen unter Verwendung zeitvariabler Frequenzen und Pegel von Teiltönen vorgestellt. Die Teiltöne lassen sich zu einem Teiltonzeitmuster (TTZM) zusammenfassen. Als psycho-physikalische Grundlage dient ein Konzept einer Spektraltonhöhenwahrnehmung, bei welchem den Spektraltonhöhen die Bedeutung von auditiven Konturen zukommt. Die Ermittlung der Teiltöne als physikalisches Äquivalent zu Spektraltonhöhenwahrnehmungen erfolgt in mehreren Stufen. Zunächst wird das Schallsignal einer Fourier-Time-Transformation (FTT) unterworfen, die eine gehörgerechte Spektralanalyse ermöglicht, die ein allgemeines zeitvariantes komplexes Spektrum zum Ergebnis hat. Nach einem zeitlichen Glätten des Leistungsspektrums werden die spektralen Maxima ermittelt. Einzelheiten der FTT sind dem Zeitschriftenbeitrag von E. TERHARDT, "Fourier Transformation of Time Signals: Conceptual Revision", Acustica, Vol. 57 (1985), S. 242 - 256 entnehmbar.

Eine weitere Auswertung des Schalls ist durch Ermittlung von virtuellen Tonhöhen möglich, die aus den Teiltönen abgeleitet werden. Die virtuelle Tonhöhenempfindung des menschlichen Ohres findet auf einer höheren Ebene der akustischen Informationsverarbeitung statt. Die virtuellen Tonhöhen werden wahrgenommen, ohne daß entsprechende Spektralanteile physikalisch vorhanden sein müssen.

Der Erfindung liegt die Aufgabe zugrunde, ein Verfahren zum Auswerten von Schall anzugeben, das insbesondere zur Auswertung von instationären Schallen geeignet ist.

Die Aufgabe wird durch die im Hauptanspruch angegebenen Merkmale gelöst.

### Vorteile der Erfindung

Das erfindungsgemäße Verfahren führt zu einer an der Wahrnehmung insbesondere technischer Schalle durch den Menschen orientierte Signalrepräsentation. Insbesondere kann eine Verbesserung und Objektivierung einer subjektiven akustischen Güteprüfung in der industriellen Produktion erreicht werden. Weiterhin wird die Entwicklung von Methoden zur Manipulation von Geräuschen industrieller Erzeugnisse unterstützt. Beispielsweise können eine gezielte Geräuschreduzierung oder eine Geräuschoptimierung systematisch erreicht werden.

Erfindungsgemäß ist vorgesehen, daß der in ein entsprechendes elektrisches Signal umgesetzte Schall zunächst einer FTT unterzogen wird, wobei aus dem Ergebnis jeweils für vorgegebene Frequenzen innerhalb eines ebenfalls vorgegebenen Auswerteintervalls Teiltöne ermittelt werden. Wesentlich ist, daß das jeweils für die Ermittlung eines Teiltons vorzugebende Auswerteintervall in Abhängigkeit von der Frequenz festgelegt wird.

Vorteilhafte Weiterbildungen und Ausgestaltungen des erfindungsgemäßen Verfahrens ergeben sich aus abhängigen Ansprüchen.

Eine gehörrichtige Auswertung wird erhalten, wenn die einzelnen Auswerteintervalle für die Ermittlung der Teiltöne bei tiefen Frequenzen länger sind als bei hohen Frequenzen. Besonders vorteilhaft werden die Auswerteintervalle gemäß den Gehöreigenschaften festgelegt, wobei die Auswerteintervalle bei verschiedenen Frequenzen im selben Verhältnis zueinander stehen, wie die entsprechenden Frequenzgruppenbreiten. Für die akustische Wahrnehmung haben sich vierundzwanzig Frequenzgruppen als wesentlich herausgestellt, die in der Einheit Bark jeweils äquidistant (1 Bark) sind. Diese Gruppen bestimmen das jeweilige Frequenz- und Zeitauflösungsvermögen des menschlichen Ohres. Experimentell hat sich herausgestellt, daß die besten Ergebnisse erhalten werden, wenn das Auswerteintervall im Bereich von 1 ms bis 10 ms liegt.

Eine besonders vorteilhafte Ausgestaltung sieht die Festlegung des Abstandes der Analysefrequenzen, eines Parameters der FTT, auf Werte kleiner oder gleich 0,35 Bark vor. Eine andere besonders vorteilhafte Ausgestaltung sieht vor, daß die in der FTT vorzugebende Fensterfunktion ein Fenster zweiter Ordnung ist, bei dem die Funktion zum Analysezeitpunkt den Wert Null annimmt, wobei die Analysebandbreite zwischen 0,2 und 0,3 Bark festgelegt wird. Mit dieser experimentell aufgefundenen Parameterwahl und die Verwendung der Fensterfunktion zweiter Ordnung ist eine gehörrichtige Signalverarbeitung für beliebige technische Schalle möglich.

Eine vorteilhafte Ausgestaltung sieht vor, daß aus den ermittelten Teiltönen einzelne Teiltöne ausgewählt werden, die sich zu Teiltonlinien zusammenfassen lassen. Die Ermittlung der Teiltonlinie ist als eine Erweiterung der Ermittlung der Teiltöne anzusehen. Die Ermittlung der Teiltonlinien ist beschränkt auf die relevanten Teiltöne. Mit dieser Maßnahme wird eine Datenreduktion erreicht. Ausgewählt werden vorzugsweise diejenigen Teiltöne, die eine frequenzabhängige Mindestlänge aufweisen. Berücksichtigt werden weiterhin Teiltöne, die sich im zeitlichen Verlauf nur geringfügig in der Frequenz unterscheiden. Die Teiltonlinien können mit Hilfe eines Mustererkennungsalgorithmus ausgesucht und anschließend als Teiltonlinienzeitmuster (TTLZM) abgelegt werden.

Eine weitere vorteilhafte Weiterbildung sieht vor, daß einzelne Teiltöne zu vorgegebenen Zeitpunkten ausgewählt und daraus virtuelle Tonhöhen ermittelt werden. Die virtuellen Tonhöhen entsprechen den vom menschlichen Gehör wahrgenommenen Tonhöhen, die tatsächlich objektiv im Spektrum des Schalls nicht vorhanden sein müssen. Die Ermittlung von virtuellen Tonhöhen ermöglicht daher eine weitergehende Auswertung von Schall.

Das erfindungsgemäße Verfahren ist, wie bereits erwähnt, insbesondere geeignet zum Auswerten von technischen Schallen. Das erfindungsgemäße Verfahren ermöglicht die Berechnung dynamischer virtueller Tonhöhen instationärer Schalle.

Eine vorteilhafte Weiterbildung der Auswertung von technischen Schallen ist besonders geeignet zum Erkennen von Klopfgeräuschen. Das Verfahren sieht vor, daß der zeitliche Pegelverlauf einer ausgewählten Teiltonlinie bewertet wird.

Weitere vorteilhafte Weiterbildungen und Ausgestaltungen des erfindungsgemäßen Verfahrens zum Auswerten von Schall ergeben sich aus weiteren abhängigen Ansprüchen in Verbindung mit der folgenden Beschreibung.

### Zeichnung

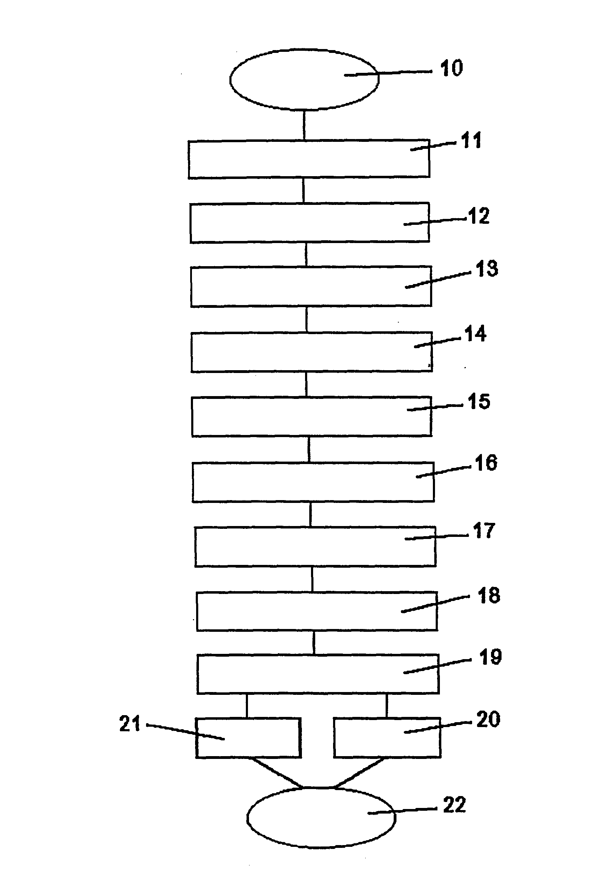

Ein erfindungsgemäßes Verfahren zum Auswerten von Schall wird anhand eines in der Figur gezeigten Flußdiagramms beschrieben.

Nach einem Start 10 des erfindungsgemäßen Verfahrens ist eine Umformung 11 vorgesehen, die einen Schall in ein entsprechendes elektrisches Signal umsetzt. In der Umformung 11 ist beispielsweise ein Mikrofon vorgesehen, das entweder auf Druck oder auf Schnelle anspricht. Nach der Umformung 11 ist eine Signalspeicherung 12 von Abtastwerten des elektrischen Signals vorgesehen. Obwohl prinzipiell eine Verarbeitung eines analogen Signals möglich ist, wird für eine technisch relevante Realisierung eine digitale Signalverarbeitung vorgesehen, die ein quantisiertes Signal voraussetzt, das zu vorgegebenen Abtastzeitpunkten aus dem analogen Signal abgeleitet wird.

### Zur Auswertung des Schalls ist zunächst eine

Fourier-Time-Transformation (FTT) vorgesehen, für die die Parameter festzulegen sind. Nach der Speicherung 12 ist daher die Parameterfestlegung 13 vorgesehen. Anschließend wird die FTT 14 durchgeführt. Die FTT 14 des dem Schall entsprechenden digitalen Signals ist ein erster Schritt einer mathematischen Realisierung der akustischen Informationsverarbeitung im Innenohr des Menschen. Eine entsprechende Wahl der Transformationsparameter ermöglicht die Anpassung an die wesentlichsten Gehöreigenschaften, insbesondere kann eine frequenzabhängige Frequenz- und Zeitauflösung realisiert werden. Bei der FTT 14 wird ein zeitabhängiges Signal mit einer kausalen Fensterfunktion multipliziert und das Produkt der Fourier-Transformation auf einem endlichen Analyseintervall unterzogen. Die FTT 14 ist in dem eingangs genannten Stand der Technik, E. TERHARDT, "Fourier Transformation of Time Signals: Conceptual Revision", Acustica, Vol. 57 (1985), S. 242 - 256 detailiert beschrieben. Auf diesen Fachzeitschriftenbeitrag wird ausdrücklich Bezug genommen.

Ein erster, in der Parameterfestlegung 13 vorzugebender Parameter ist der Abstand der Analysefrequenzen. Die FTT 14 ist für jede Analysefrequenz gesondert durchzuführen. Experimentell konnte gezeigt werden, daß der Abstand der Analysefrequenzen von kleiner oder gleich 0,035 Bark für die Auswertung von technischen Schallen und ihren besonderen Eigenschaften am besten gerecht wird.

Zur Durchführung der FTT 14 ist weiterhin die Festlegung der Fensterfunktion erforderlich. Prinzipiell geeignet sind in Richtung zurückliegender Zeitpunkte exponentiell abklingende Fensterfunktionen, vorzugsweise mit einer vorgegebenen frequenzabhängigen Abklingzeitkonstanten geeignet. Zur Vermeidung von Randeffekten bei den Integrationsgrenzen, die zwischen der Zeit Null und dem Analysezeitpunkt für kausale Signale liegen, ist es günstig, daß die Fensterfunktion zum Analysezeitpunkt den Wert Null annimmt. Weitere Einzelheiten zur Fensterfunktion sind dem Fachzeitschriftenbeitrag von M. SCHLANG und M. MUMMERT, "Die Bedeutung der Fensterfunktion für die Fourier-t-Transformation als gehörgerechte Spektralanalyse", Fortschritte der Akustik DAGA 1990, S. 1043 - 1046 entnehmbar. In der genannten Literaturstelle wird ein geeignetes Fenster als Fenster zweiter Ordnung bezeichnet. Mit der Vorgabe der Fensterfunktion ist in der Parameterfestlegung 13 die Analysebandbreite festzulegen. Die Analysebandbreite wird vorzugsweise in einem Bereich von 0,2 bis 0,3 Bark festgelegt.

Die Einführung der Analysefrequenzen und deren Frequenzabstand voneinander führt zu der Festlegung der Diskretisierung der an sich bei der FTT 14 prinzipiell möglichen kontinuierlichen Analysefrequenz. Diese Diskretisierung hat mit der zeitlichen Diskretisierung des ursprünglichen Signals in der Speicherung 12 nichts zu tun.

Die FTT 14 liefert ein komplexes gehörrichtiges Spektrum mit Betrags- und Phaseninformation. Das kontinuierliche komplexe Spektrum wird auf die akustisch relevanten, diskreten, zeitvarianten Teiltöne reduziert. Der Satz der Teiltöne zu einem festen Analysezeitpunkt definiert ein Teiltonmuster (TTM). Die zusammenfassende Darstellung der TTM zu verschiedenen, fortlaufenden Analysezeitpunkten ergeben ein Teiltonzeitmuster (TTZM). Dieses TTZM berücksichtigt sowohl die Zeitabhängigkeit als auch die Frequenzabhängigkeit eines beliebigen Schalls gemäß den Gehöreigenschaften. Die Klangfarben- und Tonhöhenwahrnehmung kann unabhängig von der Phasenlage der spektralen Komponenten erfolgen. Die Ermittlung des TTZM basiert demzufolge auf dem Leistungsspektrum, wobei die Phaseninformation des komplexen FTT-Spektrums vernachlässigt wird. Die Wahrnehmung der Spektraltonhöhen hängt nicht von der Harmonizität des Spektrums ab. Die Extraktion der zeitabhängigen Teiltöne, die definiert sind durch Tonhöhe und Pegel, kann demzufolge mittels einfacher Maximumdetektion im zeitlich geglätteten Leistungsspektrum der FTT 14 erfolgen. Nach der FTT 14 ist deshalb die Glättung 15 vorgesehen, die eine Unterdrückung der durch Einschwingvorgänge hervorgerufenen Nebenmaxima aufgrund der endlichen Signaldauer bei unendlichem Auswerteintervall ermöglicht. Die Glättung 15 erfolgt beispielsweise durch eine Tiefpaßfilterung mit einem Tiefpaß vorzugsweise 1. Ordnung die Zeitkonstante des Tiefpasses entsprechend dem frequenzabhängigen Zeitauflösungsvermögen des menschlichen Gehöres gewählt wird.

Bevor die Teiltöne ermittelt werden können, ist die Dauer des Auswerteintervalls zur Ermittlung der Teiltöne bei den jeweils vorgegebenen Frequenzen festzulegen. Nach der Glättung 15 ist deshalb die Auswerteintervallfestlegung 16 vorgesehen, an die sich die Teiltonermittlung 17 anschließt. Die Ermittlung der Teiltöne ist in dem eingangs genannten Stand der Technik von W. HEINBACH, "Aurally Adequate Signal Representation: the Part-Tone-Time-Pattern", Acustica, Vol. 67 (1988), S. 113 - 120 ausführlich bechrieben.

Hier hat es sich gezeigt, daß es besonders wesentlich ist, das jeweils für die Ermittlung eines Teiltons vorzugebende Auswerteintervall in Abhängigkeit von der Frequenz festzulegen. Mit dieser Maßnahme wird eine Anpassung an technische Schalle erreicht, die im wesentlichen instationäre Schalle sind. Die in der Auswerteintervallfestlegung 16 festzulegenden Auswerteintervalle sind bei tiefen Frequenzen länger als bei hohen Frequenzen vorzugeben. Die Festlegung des Auswerteintervalls in Abhängigkeit von der Frequenz ermöglicht eine weitere Anpassung an die Informationsverarbeitung des menschlichen Gehöres. Die sich ergebenden Teiltöne sind die, die bezüglich ihrer zeitlichen Dauer und Frequenz prinzipiell wahrnehmbar sind. Somit ist eine Wahl des Auswerteintervalls entsprechend der Wahrnehmbarkeitsgrenze zeitvarianter Signale möglich.

Besonders vorteilhaft ist es hierbei, die Auswerteintervalle bei verschiedenen Frequenzen im selben Verhältnis zueinander festzulegen wie die entsprechenden Frequenzgruppenbreiten. Für die akustische Wahrnehmung haben sich 24 Frequenzgruppen als wesentlich herausgestellt, die in der Einheit Bark jeweils äquidistant (1 Bark) sind. Diese 24 Gruppen bestimmen das jeweilige Frequenz- und Zeitauflösungsvermögen des menschlichen Gehörs. Die Frequenzgruppen sind aus dem Fachbuch von E. ZWICKER und H. FASTL, Psychoacoustics, Facts and Models", Springer-Verlag 1990, S. 133 - 155 näher erläutert. Für die Praxis hat es sich gezeigt, daß das Auswerteintervall bei hohen Frequenzen auf den Mindestwert von 1 ms und bei tiefen Frequenzen auf maximal 10 ms festgelegt werden sollte. Bei noch höheren oder noch tieferen Frequenzen werden die genannten Intervallgrenzen festgehalten und nicht mehr geändert.

Aus den ermittelten Teiltönen kann vorzugsweise ein Teiltonzeitmuster (TTZM) erstellt werden.

Eine besonders vorteilhafte Maßnahme sieht die Ermittlung von Teiltonlinien in der Teiltonlinienermittlung 18 vor, die sich an die Teiltonermittlung 17 anschließt. Aus den ermittelten Teiltonlinien kann entsprechend dem TTZM ein Teiltonlinienzeitmuster 19 (TTLZM) erstellt werden. Das TTLZM 19 ist als eine Erweiterung des TTZM anzusehen. Ziel des Teiltonlinienkonzeptes ist die Beschränkung auf die relevanten Teiltöne des TTZM. Durch diese Strukturbildung kann eine Reduzierung der redundanten Information und somit eine Datenreduktion erreicht werden. Relevante Teiltöne werden zu Teiltonlinien zusammengefaßt. Die akustische Relevanz von Teiltönen des TTZM hängt von der Vernetzung mit zeitlich benachbarten Teiltönen ab. Ein erstes Kriterium zur Auswahl von Teiltonlinien ist eine vorgegebene frequenzabhängige Mindestlänge zusammenzufassender Teiltöne. Ein anderes Kriterium ist der Frequenzabstand zwischen zwei zeitlich aufeinanderfolgender Teiltöne. Mit diesen Parametern werden der maximal erlaubte Frequenzsprung längs der Teiltonlinien sowie die frequenzabhängigen zeitlichen Mindestlängen der Teiltonlinien jeweils festgelegt.

Nach der Teiltonlinienermittlung 18 oder der Darstellung des TTLZM 19 kann sich vorteilhaft eine Ermittlung von virtuellen Tonhöhen anschließen. Während die physikalischen Teiltöne im TTZM den wahrnehmbaren Spektraltonhöhen vollständig entsprechen, werden die virtuellen Tonhöhenempfindungen auf einer höheren Ebene der akustischen Informationsverarbeitung im Gehör erhalten. Wesentlich ist es, daß den virtuellen Tonhöhen keine entsprechenden Spektralanteile des Schalls gegenüberstehen müssen. Ausgangspunkt für die Bestimmung der virtuellen Tonhöhen sind die Teiltöne und für die Bestimmung der virtuellen Tonhöhenzeitmuster die TTLZM 19. Zu jeweils vorgebbaren Zeitpunkten werden einzelne Teiltöne ausgewählt und daraus virtuelle Tonhöhen ermittelt. Das mathematische Verfahren zum Ermitteln der Tonhöhen ist aus einem Fachzeitschriftenbeitrag von E. TERHARDT, G. STOLL und M. SEEWANN, "Algorithm for extraction of pitch and pitch salience from complex tonal signals", J. Acoust. Soc. Am. 71(3), March 1982, S. 679 - 688 entnehmbar.

Eine andere, besonders vorteilhafte Auswertung von Teiltonlinien sieht vor, daß der zeitliche Pegelverlauf einer ausgewählten Teiltonlinie bewertet wird. Vorgegeben sein kann eine Pegeländerung im vorgegebenen Auswerteintervall bezogen auf eine Gesamtlänge der Teiltonlinie, wobei Schwellen beispielsweise in Abhängigkeit vom Pegel selbst und/oder der Frequenz und/oder der Dauer der Pegeländerung im Auswerteintervall festgelegt werden. Dieses Verfahren ist speziell darauf zugeschnitten, impulshafte Signalanteile zu erkennen. Ein Klopfen als Beispiel eines Schalls mit solchen Anteilen tritt bei industriellen Schallen insbesondere bei Motoren auf, die beispielsweise eine Änderung in einem Lager oder beispielsweise einen Lagerschaden aufweisen. Ein Klopfen tritt ferner bei Getrieben auf, insbesondere bei solchen Getrieben, die fehlerhaft sind. Das Verfahren ermöglicht somit eine objektive Erkennung und Bewertung in einer Klopferkennung 21.

Nach einer Ermittlung von virtuellen Tonhöhen oder nach dem Durchlaufen der Klopferkennung 21 ist das erfindungsgemäße Verfahren mit dem Ende 22 abgeschlossen.

## Patentansprüche

1. Verfahren zum Auswerten von Schall, der in ein entsprechendes digitales Signal umgesetzt und anschließend einer Fourier-Time-Transformation (FTT 14) unterzogen wird, wobei aus dem Ergebnis jeweils für vorgegebene Frequenzen innerhalb eines ebenfalls vorgegebenen Auswerteintervalls Teiltöne (17) ermittelt werden, dadurch gekennzeichnet, daß das jeweils für die Ermittlung eines Teiltons (17) vorzugebende Auswerteintervall in Abhängigkeit von der Frequenz festgelegt wird.

2. Verfahren nach Anspruch 1, dadurch gekennzeichnet, daß die einzelnen Auswerteintervalle bei tiefen Frequenzen länger sind als bei hohen Frequenzen.

3. Verfahren nach Anspruch 2, dadurch gekennzeichnet, daß die Auswerteintervalle gemäß den Gehöreigenschaften festgelegt sind, wobei die Zeitintervalle bei verschiedenen Frequenzen im selben Verhältnis zueinander stehen wie die entsprechenden Frequenzgruppenbreiten.

4. Verfahren nach einem der Ansprüche 1 bis 3, dadurch gekennzeichnet, daß das Auswerteintervall mindestens 1 ms und maximal 10 ms beträgt.

5. Verfahren nach Anspruch 1, dadurch gekennzeichnet, daß eine für die FTT (14) vorzugebende Fensterfunktion eine Fensterfunktion 2. Ordnung ist, und daß die vorzugebende Analysebandbreite im Bereich von 0,2 bis 0,3 Bark liegt.

6. Verfahren nach Anspruch 1, dadurch gekennzeichnet, daß der für die FTT (14) vorzugebende Abstand der Analysefrequenzen auf einen Wert von kleiner oder gleich 0,035 Bark festgelegt ist.

7. Verfahren nach Anspruch 1, dadurch gekennzeichnet, daß einzelne Teiltöne (17) ausgewählt werden, die sich zu Teiltonlinien (18) zusammenfassen lassen.

8. Verfahren nach Anspruch 1, dadurch gekennzeichnet, daß einzelne Teiltöne (17) zu vorgegebenen Zeitpunkten ausgewählt und daraus virtuelle Tonhöhen ermittelt werden.

9. Verfahren nach einem der vorhergehenden Ansprüche, gekennzeichnet durch die Verwendung zur Auswertung von technischen Schallen.

10. Verfahren nach Anspruch 7 und 9, gekennzeichnet durch die Verwendung zum Erkennen von Klopfen, bei dem der zeitliche Pegelverlauf einer ausgewählten Teiltonlinie (18) bewertet wird.

11. Verfahren nach Anspruch 10, dadurch gekennzeichnet, daß eine Pegeländerung in einem Auswerteintervall, bezogen auf die gesamte Teiltonlinienlänge vorgegeben ist und daß die Pegeländerung mit wenigstens einer Schwelle verglichen wird, wobei die Schwelle in Abhängigkeit Vom Pegel selbst und/oder von der Frequenz und/oder von der Dauer der Pegeländerung im vorgegebenen Auswerteintervall festgelegt wird.

## Claims

1. Method for evaluating sound which is converted into a corresponding digital signal and subsequently subjected to a Fourier time transformation (FTT 14), part tones (17) being determined from the result in each case for prescribed frequencies within a likewise prescribed evaluation interval, characterized in that the evaluation interval respectively to be prescribed for determining a part tone (17) is fixed as a function of the frequency.

2. Method according to Claim 1, characterized in that the individual evaluation intervals are longer for low frequencies than for high frequencies.

3. Method according to Claim 2, characterized in that the evaluation intervals are fixed in accordance with the hearing characteristics, the time intervals for different frequencies relating to one another in the same way as the corresponding aural critical bandwidth.

4. Method according to one of Claims 1 to 3, characterized in that the evaluation interval is at least 1 ms and at most 10 ms.

5. Method according to Claim 1, characterized in that a window function to be specified for the FTT (14) is a window function of second order, and in that the analysis bandwidth to be prescribed is in the region of 0.2 to 0.3 Barks.

6. Method according to Claim 1, characterized in that the spacing of the analysis frequencies which is to be specified for the FTT (14) is fixed at a value of less than or equal to 0.035 Barks.

7. Method according to Claim 1, characterized in that individual part tones (17) which can be combined to form part tone lines (18) are selected.

8. Method according to Claim 1, characterized in that individual part tones (17) are selected at prescribed instants and virtual pitches are determined therefrom.

9. Method according to one of the preceding claims, characterized by being used to evaluate industrial sounds.

10. Method according to Claims 7 and 9, characterized by being used to detect knocking, in which case the temporal level profile of a selected part tone line (18) is evaluated.

11. Method according to Claim 10, characterized in that a level variation is prescribed in an evaluation interval in a fashion referred to the total part tone line length, and in that the level variation is compared with at least one threshold, the threshold being fixed in the prescribed evaluation interval as a function of the level itself and/or of the frequency and/or of the duration of the level variation.

## Revendications

1. Procédé d'évaluation du son selon lequel on le transforme en un signal numérique puis on lui fait subir une transformation de Fourier dans le temps (transformation FTT 14) et à partir du résultat, chaque fois pour des fréquences prédéterminées dans un intervalle d'évaluation également prédéterminé, on détermine des sons partiels 17,
caractérisé en ce qu'
on fixe l'intervalle d'évaluation à prédéterminer pour déterminer un son partiel 17 en fonction de la fréquence.

2. Procédé selon la revendication 1,
caractérisé en ce que
les différents intervalles d'évaluation sont plus longs aux fréquences basses qu'aux fréquences élevées.

3. Procédé selon la revendication 2,
caractérisé en ce que
les intervalles d'évaluation sont fixés suivant les propriétés de l'ouïe, les intervalles de temps aux différentes fréquences étant dans le même rapport que les largeurs de groupes de fréquences correspondants.

4. Procédé selon l'une des revendications 1 à 3,
caractérisé en ce que
l'intervalle d'évaluation est compris entre au moins 1 ms et au maximum 10 ms.

5. Procédé selon la revendication 1,
caractérisé en ce qu'
une fonction de fenêtre prédéterminée pour la transformation FTT (14) est une fonction de fenêtre du deuxième ordre et la largeur de bande d'analyse à prédéterminer se situe dans une plage comprise entre 0,2 et 0,3 Bark.

6. Procédé selon la revendication 1,
caractérisé en ce que
la distance à prédéterminer des fréquences d'analyse pour la transformation FTT (14) est fixée à une valeur inférieure ou égale à 0,035 Bark.

7. Procédé selon la revendication 1,
caractérisé en ce qu'
on choisit les différents sons partiels (17) qui peuvent être réunis en des lignes de sons partiels (18).

8. Procédé selon la revendication 1,
caractérisé en ce que
les différents sons partiels (17) sont choisis à des instants prédéterminés et à partir de là, on détermine des hauteurs de sons virtuels.

9. Procédé selon l'une quelconque des revendications précédentes,
caractérisé dans son application à l'évaluation de sons techniques.

10. Procédé selon les revendications 7 et 9,
caractérisé par
son application à la reconnaissance du cliquetis selon laquelle on exploite le tracé du niveau dans le temps d'une ligne de sons partiels (18) choisie.

11. Procédé selon la revendication 10,
caractérisé en ce qu'
une variation de niveau rapportée à un intervalle d'exploitation par rapport à toute la longueur de lignes de sons partiels est prédéterminée et on compare la variation de niveau à au moins un seuil, le seuil étant fixé en fonction du niveau lui-même et/ou de la fréquence et/ou de la durée de la variation de niveau dans l'intervalle d'exploitation prédéterminé.
